# EUROPEAN PATENT APPLICATION

(11) **EP 1 715 378 A1**
(43) Date of publication of application: **25.10.2006**
(21) Application number: 06290623.5
(22) Date of filing: 18.04.2006
(51) Int. Cl.: G03B 9/00

(54) **Small form factor camera module with mechanical iris and shutter**

(30) Priority: 18.04.2005 KR 2005032049
(71) Applicant: LG ELECTRONICS INC., Seoul 150-721 (KR)
(72) Inventor: Ji, Chang-Hyeon, Seoul 137-754 (KR); Bu, Jong-Uk c/o 804-101, Jeongdeun Hanjin Apt., Seongnam-si, Gyeonngi-do 463-757 (KR); Kim, Sang-Cheon c/o 227-603, Saemteo Maeul Jugong, Goyang-si, Gyeonnggi-do 412-717 (KR); Kim, Seong-Hyok, Eunpyeong-gu, Seoul 122-051 (KR); Choi, Jung-Hoon c/o 325-1001, Seongnam-si, Gyeonggi-do 463-010 (KR)
(74) Representative: Loisel, Bertrand

(57) **Abstract**

The present invention relates to a small form factor camera module, more particularly, to a small form factor camera module having a mechanical iris and a shutter not only to improve an image quality by adjusting an amount of a light entering an image sensor but also to remarkably reduce a volume of the entire system by using an electromagnetic force and therefore to be applied to various applications which require for a small form factor camera module including a handheld terminal and so on, contrary to the existing electronic shutter. In order to obtain the object of the present invention, the small form factor camera module having a lens assembling body consisting of more than one lens for obtaining an image of an object, an image sensor for transforming the image passed through the lens into an electric signal and a peripheral circuit unit connected with the image sensor, further comprising: a light amount adjustment device capable of adjusting a light amount of an image reaching an image sensor through the lens assembling body by controlling an incidence area and an incidence time.

## Description

### BACKGROUND OF THE INVENTION

### Field of the Invention

The present invention relates to a small form factor camera module, more particularly, to a small form factor camera module having a mechanical iris and a shutter which not only can improve an image quality by adjusting the amount of a light entering an image sensor but also can remarkably reduce the volume of the total system by using an electromagnetic force and therefore can be applied to various applications which require for a small form factor camera module including a handheld terminal and so on.

In accordance with the developments of a recent communication technology and a digital information processing technology, a technology for a handheld terminal where various functions like an information processing, a calculation, a telecommunication and an image information input/output are incorporated has been developed.

For example, in personal digital assistants PDA having a digital camera and communication functions and a handy phone having a digital camera and PDA functions. It is a recent trend to equip a digital camera module with a high specification in accordance with the developments of a digital camera technology and capabilities of storing information.

In accordance with the developments of other technologies for supporting the above, as a mega pixel level image sensor is used in a digital camera module equipped in a handy phone, an optical zooming and auto focusing functions as well as a mechanical shutter and a mechanical iris functions draw more attention than ever.

A method for operating a CCD uses two scanning methods of an interlaced scan and a progressive scan.

As the interlaced scan method scans an image twice using this method used in the existing video CCD, it is disadvantageous in that an image quality becomes degraded because a light keeps entering until the second scan is performed after the first scan is completed.

Accordingly, a process for completely shutting off a light during the two scan processes using a mechanical shutter should be considered in order to obtain a high quality image.

### Background of the Related Art

Contrary to this, when a 350,000 pixel grade digital cameras have been mainly used, a progressive scan method where all the pixels are scanned once was adapted. This method is advantageous in that no error occurs due to an interval in time and a control is possible only with an electronic shutter not a mechanical shutter.

However, in more than 3,000,000 pixel digital cameras which are recently used, an interlaced scan method expecting a better image quality is adapted again, because more lights can be obtained with the same CCD size.

As described above, an expected quality image cannot be obtained with an electronic shutter, thus a research for a technology for adapting a mechanical shutter has been carried out.

The mechanical shutter has a function to shut off an unnecessary light by really winking out a shutoff layer when a photograph is taken like a person winks to upgrade an image quality by one level. When shooting a strong reflected light such as an electric light or the sun, a smear phenomenon that a streak of light appears on a screen in a vertical direction is prevented using hardwares, not softwares, therefore it is possible to obtain clearer photographs.

If a mechanical iris is adapted, the amount of an entering light is adjusted and an appropriate exposure value along with a mechanical shutter are profitably used to obtain a clear image quality. Furthermore, the depth of a field can be adjusted so that pictures in various atmospheres reflecting photographers' personal views can be obtained in a small form factor camera module.

In addition, a camera with a mechanical iris structure has a function to decrease an aberration occurring in a difference between a light entering from the center of a lens and a light entering from the peripheral unit to prevent a light from being entered from the peripheral unit of the lens by tightening an iris, resulting in obtaining a clear photograph having a low aberration by using a light in the center of a lens in an image.

Thus, researches have been conducted to adapt a mechanical iris as the necessary parts in a mega pixel camera requiring for a high quality image.

In order to apply the functions of a mechanical shutter and an iris to a small form factor digital camera module, an actuator capable of satisfying a high-speed mobility, a low power consumption and a big displacement is required with occupying a relatively small volume.

Especially, an actuator capable of corresponding to an increase of the displacements in accordance with an increase of the size of an image increases is required. In a conventional electromagnetic actuator employing a number of parts, there are limits in costs and sizes and increasing a displacement. Thus, it is not sufficient to realize the same functions as the existing mechanical iris, because the on/off functions are used.

In addition, when driving a moving unit with an actuator exercising in a rotation such as a stepping motor, gears are used in a process for transmitting a power. Therefore, a number of parts are used and its structure is complicated.

Moreover, it is disadvantageous in that a response speed is low and a friction and a noise occur in a gear unit. In case of a mechanical shutter and an iris actuator adapting the above described method, it is difficult to manufacture a cheap actuator due to its complicated structure and there is a limit in minimizing the size.

### SUMMARY OF THE INVENTION

In an effort to obtain the above object, an object of the present invention is to provide with a camera module manufactured to have a mechanical shutter and an iris using a linear actuator manufactured by a Voice Coil Motor VCM method in a minute precision processing technology or a micromachining process to improve an image quality and to have various structures in accordance with a method for depositing a shutter, an iris and an optical module.

It is another object of the present invention to integrate the small form factor mechanical shutter and the iris in minimizing and lightening a camera.

In order to obtain the object of the present invention, a small form factor camera module having a lens assembling body consisting of more than one lens for obtaining an image of an object, an image sensor for transforming the image passed through the lens into an electric signal and a peripheral circuit unit connected with the image sensor, further comprises: a light amount adjustment device capable of adjusting a light amount of an image reaching an image sensor through the lens assembling body by controlling an incidence area and an incidence time.

The light amount adjustment device comprises: a base plate where a through hole is formed; a shutter actuator formed on the base plate, having a wider open hole than the through hole, a driving magnet formed at a side of the open hole and a pair of shutter links at both sides of the open hole; an iris consisting of a pair of iris plates having a link slit connected with the shutter link for switching a through hole by an operation of the shutter link; a cover plate assembled with the base plate by a coupling means, having a through hole with the same position and size as the base plate, and a driving coil for receiving an electricity from the power and generating an electromagnetic force to displace the shutter driving unit; and a restoring means for restore the shutter actuator into the initial position.

Moreover, the restoring means is established on the cover plate.

Furthermore, the restoring means is established on the base plate.

In addition, the restoring means is a permanent magnet giving an electromagnetic force to the driving magnet.

Moreover, the restoring means is a spring connected with the shutter actuator to directly provide a restoring force.

Furthermore, the time and the amount of a current provided to the driving coil is controlled to adjust the degree and time of a switch of the through hole.

In addition, the link slit is formed to have a linear shape with a predetermined gradient so as to adjust the degree and the time of a switch of the through hole.

In addition, the link slit is formed to have a curved shape to adjust the degree and the time of a switch of the through hole.

Moreover, the link slit is formed to have a combination of a linear shape and a curved shape to adjust the degree and the time of a switch of the through hole.

Moreover, the shutter actuator and the iris have a loose groove so that their operations are not prevented by the coupling means.

A magnetic substance is further formed on the lower portion of the base plate, wherein an attractive force between the driving magnet is generated for preventing the iris section and the shutter actuator are moved when a current is prevented from being provided into the driving coil.

The magnetic substance is plate-shaped and is longer than the driving magnet in the displacement direction.

### BRIEF DESCRIPTION OF THE DRAWINGS

The above and other objects, features and advantages of the present invention will be apparent from the following detailed description of the preferred embodiments of the invention in conjunction with the accompanying drawings, in which:
Fig. 1 is a mimetic diagram showing a general lens group assembling body.
Fig. 2 is a mimetic diagram showing a structure of a general small form factor camera module.
Fig. 3 is a perspective view of a light amount adjustment device in accordance with the embodiment 1 of the present invention.
Fig. 4 is a disassembled perspective view of the light amount adjustment device of Fig. 3.
Figs. 5 & 6 are conceptual views for illustrating an operational method of the embodiment 1 of the present invention.
Figs. 7 & 8 are conceptual views for illustrating an operational method of the embodiment 2 of the present invention.
Fig. 9 is a conceptual view for illustrating the shape of a shutter slit in the embodiments 1, and 3 to 5 of the present invention.
Fig. 10 is a perspective view of the light adjustment device according to the embodiment 6 of the present invention.
Fig. 11 is a bottom view of the base plate according to the embodiment 6 of the present invention.
Fig. 12 is a disassembled perspective view of the light adjustment device according to the embodiment 6 of the present invention.
Fig. 13 is a cross-sectional view in the vertical direction showing the magnitude of a force operated in case that a current is shut off in the embodiment 6 of the present invention.
Fig. 14 is a cross-sectional view in the vertical direction showing the magnitude of a force operated in case that a current is provided in the embodiment 6 of the present invention.

### DETAILED DESCRIPTION OF THE INVENTION

The embodiments of the present invention will be described in detail with reference to the attached drawings. Reference now should be made to the drawings, in which the same reference numerals are used throughout the different drawings to designate the same or similar components. In the following description of the present invention, detailed descriptions may be omitted if it is determined that the detailed descriptions of related well-known functions and construction may make the gist of the present invention unclear.

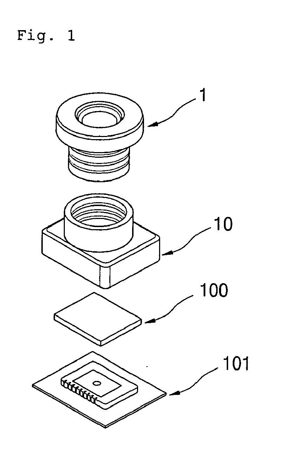

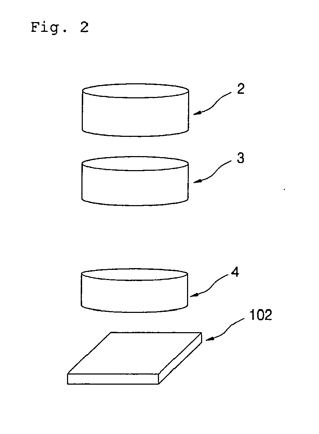

Figs. 1 and 2 are mimetic diagrams showing the structure of a general small form factor camera module.

The camera adopting a general CMOS or a CCD image sensor consists of a lens group assembled body 1 with the image sensor 100 and more than one lens except a peripheral circuit unit 101.

Accordingly, as shown in Fig. 1, a lens group assembled body 1, a case 10 for containing the lens group assembled body 10, an image sensor 100 on a lower portion of the lens group assembled body 1 for receiving an image from the lens group assembled body 1 and a peripheral circuit unit 101 connected with the image sensor 100 to grasp an information of the image sensor 100.

Recently, as a mega pixel level image sensor is used in a digital camera module mounted on a handheld terminal, it draws more attention whether to adopt a plurality of optical parts unifying a plurality of lens group assembled bodies, an optical zoom and an auto focus functions.

Accordingly, as shown in Fig. 2, besides the lens group assembled body 2, more than one optical parts 3 and 4 including another lens group assembled body and/or iris and a shutter are further included, and an image sensor 102 is mounted at the lowest part.

However, the small form factor digital camera module must satisfy the capacities like a high speed mobility, a low power consumption and a big displacement, the camera module occupying a relatively minimum volume in comparison with the size of an entire device. If an actuator performing a rotation exercise like a conventional stepping motor moves a driving part, it is disadvantageous in that a number of parts are used, its structure becomes complicated and the volume increases due to the size of a motor.

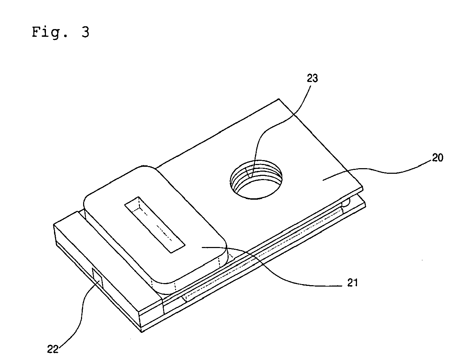

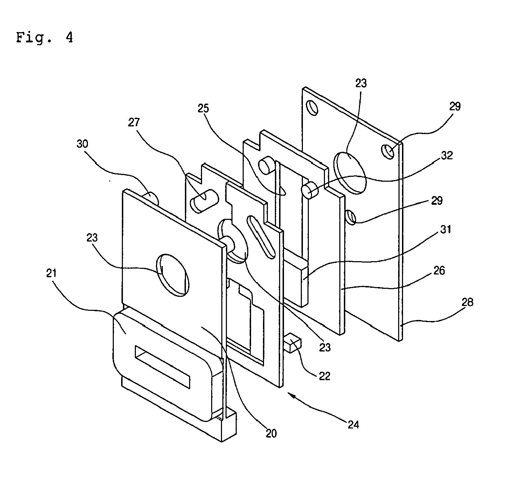

Fig. 3 is a perspective view of a light amount adjustment device in accordance with the present invention and Fig. 4 is a disassembled perspective view of a light amount adjustment device of Fig. 3.

The light amount adjustment device according to the present invention is adapted as a part of a lens group assembling body or a small form factor camera module structure of Figs. 1 and 2 to play a role in controlling a light amount of an image. The device has an advantage in that less parts are used in comparison with a mechanical shutter and an iris structure using the existing motor, occupying the small volume.

The light amount adjustment device consists of a base plate 28 where a through hole 23 and a coupling hole 29 are formed, a shutter actuator 26 having an open hole 25 where a driving magnet 31 is formed and a shutter link 32, an iris section 24 having a link slit 27, and a cover plate 20 having a coupling link 30 formed to assemble with the base plate 28, the through hole 23, a driving magnet 21 and a restoring magnet 22.

The through hole 23 is formed at the same position in the iris section 24 and the base plate 28 to be identical, the shutter actuator 26 has an open hole 25 with a larger area than the through hole 23 and the open hole 25 has a rectangular shape.

In addition, the driving magnet 31 is installed at a lower portion of the open hole 25. A coupling hole 29 of the base plate 23 is connected with a coupling link 30 formed on the cover plate 20.

Conversely, the coupling hole 29 can be formed on the cover plate 20 and the coupling link 30 can be formed on the base plate 23.

Of course, it is possible to connect using a coupling means besides a coupling link 30, for example, a rivet.

The coupling hole 29 and the coupling link 30 are formed at both sides of the upper portion of the base plate 23 and the cover plate 20 and under the through hole 23 in the embodiment 1 of the present invention.

The shutter actuator 26 and the iris section 24 have a chamfering as a loose hole at both upper sides so that they can operate without any obstacles by the coupling link 30.

Accordingly, the shutter actuator 26 and the iris section 24 can operate freely within a range of the intended operations in spite of the existence of the coupling link 30.

The shutter actuator 26 has the shutter link 32 which is confined within the link slit 27 of the iris section 24.

The driving magnet 31 installed at the shutter actuator 26 is installed at a position where an electromagnetic force can be operated to the maximum between the driving coil 21 of the cover plate 20.

The iris section 24 has two overlapped iris plates which are mutually symmetrical. The through hole 23 has a completely open state when an interval between the two iris plates becomes the maximum, and the through hole 23 has a closing state when an interval between the two iris plates becomes the minimum.

The controls of an interval between the two iris plates are performed by a vertical movement of the shutter link 32 of the shutter actuator 26 connected with the link slit 27 formed on the two iris plates, respectively.

The iris plate can be formed to consist of one or two pairs in the embodiment 1.

The vertical movements of the shutter link 32 are performed by the driving magnet 31, the driving coil 21 and the restoring magnet 22.

The through hole 23 is formed at an upper portion and the driving coil 21 is formed at a lower portion of the cover plate 20, and a restoring magnet 22 being a permanent magnet is installed under the driving magnet 21.

It is possible to install the restoring magnet 22 at the base plate 28.

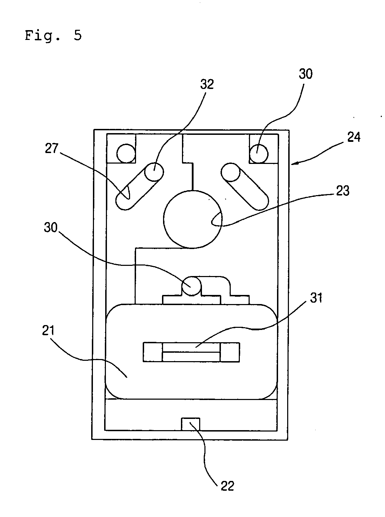

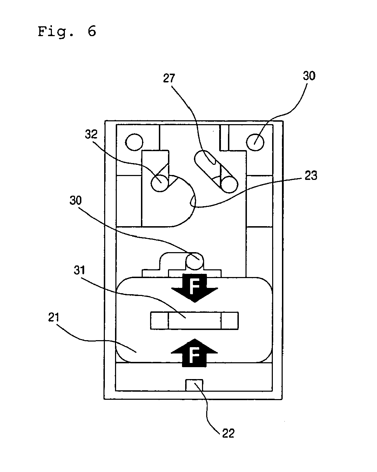

Figs. 5 and 6 are conceptual views illustrating an operational method of the embodiment 1 of the present invention.

In the light amount adjustment device of the present invention, the iris section 24 positioned around the through hole 23 performs a switch of the through hole 23 using an electromagnetic force generated between the driving coil 21 and the driving magnet 31.

In other words, if a current is provided to the driving coil 21, the shutter actuator 26 performs a straight movement in a vertical direction by an electromagnetic force generated between the driving coil and the driving magnet 31, and two iris plates of the iris section 24 positioned around the through hole 23 close the through hole 23 by the shutter actuator 26, the shutter link 32 assembled on a regressive scale and the link slit 27. Conversely, if a current in not provided to the driving coil 21, the driving magnet 31 returns to its initial position by an electromagnetic force generated between the driving magnet 31 and the restoring magnet 22 and the two iris plates of the iris section 24 open the through hole 23 by the operations of the shutter link 32.

Accordingly, the light amount adjustment device restricts a current into the driving coil 21 to control a light amount of an image and a time when an image is exposed to an image sensor, thus it can play a role as a shutter and an iris.

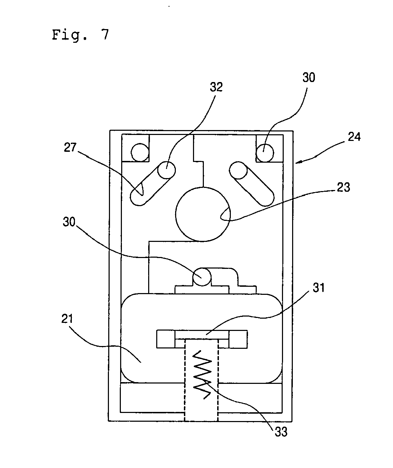

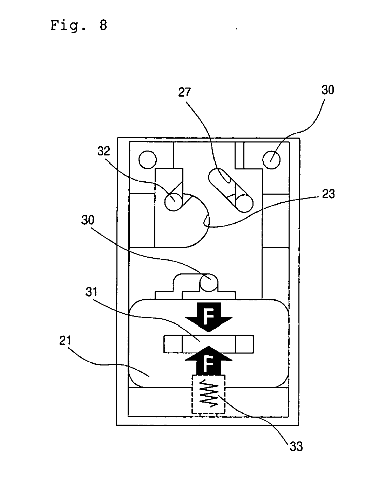

Figs. 7 and 8 show the operations of the embodiment 2 of the present invention in a case that a restoring spring 33 is installed as a restoring means instead of a restoring magnet 22. The other components besides the restoring spring 33 are the same as the embodiment 1.

Accordingly, the operations in the embodiment 2 are the same as the embodiment 1.

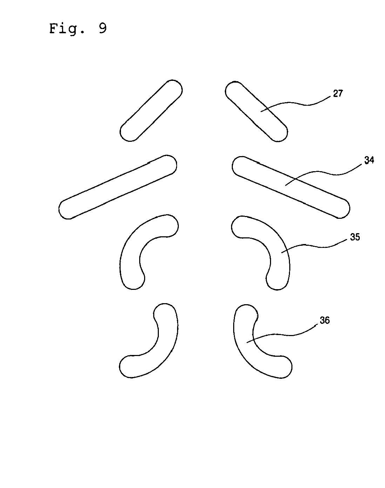

Fig. 9 shows various shapes of the shutter slit, wherein the uppermost one is a shutter slit 27 in the embodiment 1, and the shutter slits 34, 35 and 36 in the embodiments 3, 4 and 5 are sequentially shown.

First, the shutter slit 27 in the embodiment 1 has a movement of the shutter actuator 26 to a horizontal movement of the iris section 24 for the switch of an optical pathway being 1 to 1.

In addition, the shutter slit 34 in the embodiment 3 has a movement of the shutter actuator 26 to a horizontal movement of the iris section 24 for the switch of an optical pathway being 1 to 2.

The shutter slit 35 in the embodiment 4 is formed convexly so that a horizontal movement of the iris section 24 for the switch of an optical pathway is gradually decreased as a movement of the shutter actuator 26 is increased.

Contrary to the embodiment 4, the shutter slit 36 in the embodiment 5 is formed concavely so that a horizontal movement of the iris section 24 for the switch of an optical pathway is gradually increased as a movement of the shutter actuator 26 is increased.

Moreover, the shutter slit 27 may be formed by combining a linear shape with a circled shape.

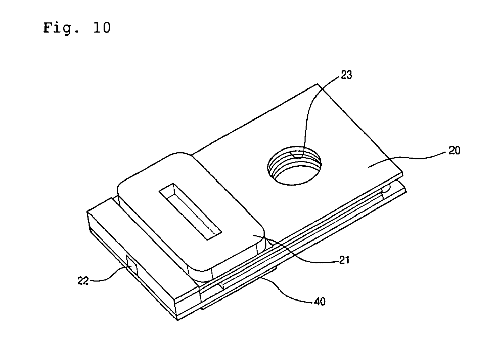

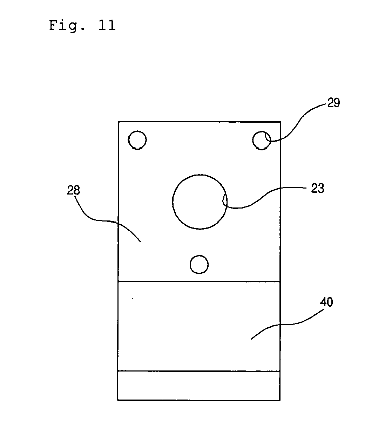

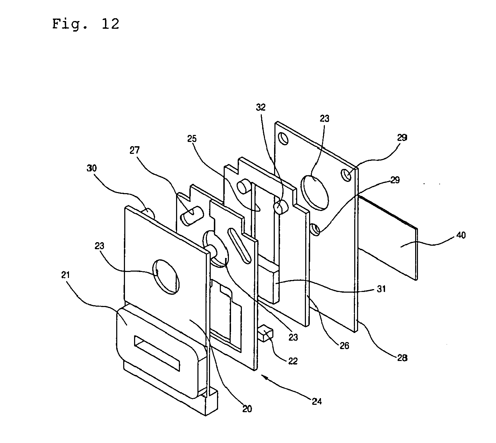

Fig. 10 is a perspective view of the light adjustment device according to the embodiment 6 of the present invention, Fig. 11 is a bottom view of the base plate 28 according to the embodiment 6 of the present invention and Fig. 12 is a disassembled perspective view of the light adjustment device according to the embodiment 6 of the present invention.

Like the embodiments 1 and 2, an actuator using an electromagnetic force between the driving coil 21 and the driving magnet 31 may have a disadvantage to continuously consume a power by applying a current in order to maintain a regular displacement.

Accordingly, in the embodiment 6, a magnetic substance 40 is further mounted on the base plate 28 of the light amount adjustment device in the embodiment 1 and the shutter actuator 26 contacts the base plate 28 by an attractive force generated between the magnetic substance 40 and the driving magnet 31 even if a current is not applied into the driving coil 21, therefore a ratching operation for maintaining a regular displacement is performed by a contact frictional force.

Therefore, if a current is prevented form being applied to the driving coil 21, the position of the shutter actuator 26 is fixed by a mutual attractive force between the magnetic substance 40 and the driving magnet 31.

At this time, it is preferable that the length of the magnetic substance 30 (based on the displacement direction of the driving magnet 31) be longer than the length of the driving magnet 31 in the displacement direction, more preferable that the length be greater than the distance between a upper dead point at an upper displacement of the driving magnet 31 and a lower dead point at a lower displacement.

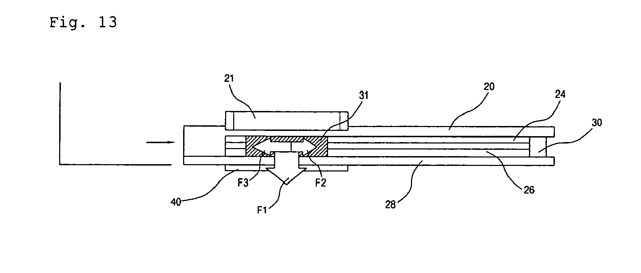

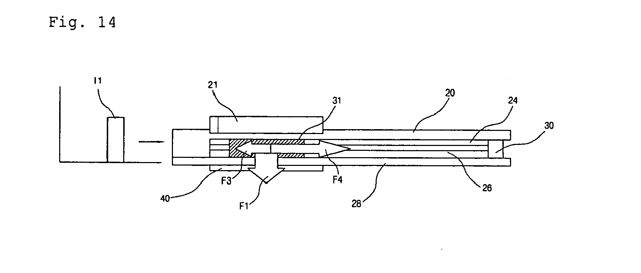

Fig. 13 is a cross-sectional view in the vertical direction showing the magnitude of a force operated in case that a current is shut off in the embodiment 6 of the present invention, and Fig. 14 is a cross-sectional view in the vertical direction showing the magnitude of a force operated in case that a current is provided in the embodiment 6 of the present invention.

As shown in Fig. 13, when a force (attractive force or repulsive force) is not generated between the driving coil 21 and the driving magnet 31 without applying a current into the driving magnet 21, a frictional force F3 is generated by the attractive force F1 generated between the driving magnet 31 and the magnetic substance 40.

This applies a ratching function to maintain a current position without applying a current, and especially, provides a ratching function to maintain the current position even if an undesired force F2 is generated by external changes such as gravity.

Moreover, as shown in Fig. 14, if a current is applied to the driving coil 21, a driving force F4 is generated by the driving coil 21 and the driving magnet 31. If the driving force F4 is greater than the frictional force F3 generated by the attractive force F1 between the driving magnet 31 and the magnetic substance 40, the shutter actuator 26 moves.

Accordingly, the iris section 24 may be opened and closed by operations of the shutter actuator 26.

In addition, the opening and closing displacement can be controlled by adjusting the magnitude and the time of a current I1 applied into the driving coil 21, and the opening and closing direction can be controlled by changing a direction of the applying current 11.

In addition, in the present invention, the driving magnet 31 is positioned in a driving unit being the shutter actuator 28, and the driving coil 21 is positioned on the cover plate 20, but it is also possible that a driving coil is mounted on the shutter actuator and a driving magnet is mounted on the cover plate.

The present invention has been described with reference to the preferred embodiments, but it is apprehended that the present invention can be modified and changed within the spirit and scope described in the claims into various ways to those skilled in the art.

The small form factor camera module according to the present invention, having a mechanical iris and a shutter, not only improves an image quality by adjusting the amount of a light entering an image sensor but also remarkably reduces the volume of an entire system by using an electromagnetic force. Therefore, it can be modified into various applications which require for a small form factor camera module including a handheld terminal and so on.

Moreover, a mechanical shutter and an iris are provided to apply low power functions and it is expected that this can be applied to various handheld devices including PDA or a handy phone.

## Claims

1. A small form factor camera module having a lens assembling body consisting of more than one lens for obtaining an image of an object, an image sensor for transforming the image passed through the lens into an electric signal and a peripheral circuit unit connected with the image sensor, further comprising:
a light amount adjustment device capable of adjusting a light amount of an image reaching an image sensor through the lens assembling body by controlling an incidence area and an incidence time.

2. The small form factor camera module of the claim 1,
wherein the light amount adjustment device comprises:
a base plate where a through hole is formed;
a shutter actuator formed on the base plate, having an open hole with a wider area than the through hole, a driving magnet formed at a side of the open hole and a pair of shutter links at both sides of the open hole;
an iris consisting of a pair of iris plates having a link slit connected with the shutter link for switching a through hole by an operation of the shutter link;
a cover plate assembled with the base plate by a coupling means, having a through hole with the same position and size as the base plate, and a driving coil for receiving an electricity from the power and generating an electromagnetic force to displace the shutter driving unit; and
a restoring means for restoring the shutter actuator into the initial position.

3. The small form factor camera module of the claim 2,
wherein the restoring means is established on the cover plate.

4. The small form factor camera module of the claim 2,
wherein the restoring means is established on the base plate.

5. The small form factor camera module of the claim 2,
wherein the restoring means is a permanent magnet providing an electromagnetic force to the driving magnet.

6. The small form factor camera module of the claim 2,
wherein the restoring means is a spring connected with the shutter actuator to directly provide a restoring force.

7. The small form factor camera module of the claim 2,
wherein the through hole is **characterized in that** the degree and the time of switch thereof is adjusted by controlling the amount and the time of a current provided to the driving coil.

8. The small form factor camera module of the claim 2,
wherein the link slit is formed to have a linear shape with a predetermined gradient so as to adjust the degree and the time of a switch of the through hole.

9. The small form factor camera module of the claim 2,
wherein the link slit is formed to have a curved shape to adjust the degree and the time of a switch of the through hole.

10. The small form factor camera module of the claim 2,
wherein the link slit is formed to have a combination of a linear shape and a curved shape to adjust the degree and the time of a switch of the through hole.

11. The small form factor camera module of the claim 2,
wherein the shutter actuator and the iris section have a loose groove so that their operations are not prevented by the coupling means.

12. The small form factor camera module of the claim 2, further comprising a magnetic substance on the lower of the base plate,
wherein an attractive force between the driving magnet is generated for preventing the iris section and the shutter actuator are moved when a current is prevented from being provided into the driving coil.

13. The small form factor camera module of the claim 12,
wherein the magnetic substance is plate-shaped and is longer than the driving magnet in the displacement direction.

14. A small form factor camera module having a lens assembling body consisting of more than one lens for obtaining an image of an object, an image sensor for transforming the image passed through the lens into an electric signal and a peripheral circuit unit connected with the image sensor, further comprising:
a light amount adjustment device having an iris capable of controlling an incidence area and an incidence time of a light amount of an image reaching an image sensor through the lens assembling body and a shutter actuator operating the iris by an electromagnetic force,
wherein the light amount adjustment device performs a control of a light amount of an image by controlling the magnitude of an electromagnetic force and the maintaining time.

15. The small form factor camera module of the claim 14,
wherein the light amount adjustment device comprises:
a base plate where a through hole is formed;
a shutter actuator formed on the base plate, having an open hole with a wider area than the through hole, a driving magnet formed at a side of the open hole and a pair of shutter links at both sides of the open hole;
an iris section consisting of a pair of iris plates having a link slit connected with the shutter link for switching a through hole by an operation of the shutter link;
a cover plate assembled with the base plate by a coupling means, having a through hole with the same position and size as the base plate, and a driving coil for receiving an electricity from the power and generating an electromagnetic force to displace the shutter driving unit; and
a restoring means for restoring the shutter actuator into the initial position.

16. The small form factor camera module of the claim 15,
wherein the restoring means is established on the cover plate.

17. The small form factor camera module of the claim 15,
wherein the restoring means is established on the base plate.

18. The small form factor camera module of the claim 15,
wherein the restoring means is a permanent magnet providing an electromagnetic force to the driving magnet.

19. The small form factor camera module of the claim 15,
wherein the restoring means is a spring connected with the shutter actuator to directly provide a restoring force.

20. The small form factor camera module of the claim 15, further comprising a magnetic substance on the lower of the base plate,
wherein an attractive force between the driving magnet is generated for preventing the iris section and the shutter actuator are moved when a current is prevented from being provided into the driving coil.
